# EUROPEAN PATENT APPLICATION

(11) **EP 3 499 101 A1**
(43) Date of publication of application: **19.06.2019**
(21) Application number: 17206735.7
(22) Date of filing: 12.12.2017
(51) Int. Cl.: F16K 27/00, F16K 31/40, F25B 13/00, F16K 11/24, F24F 1/32

(54) **VALVE ARRANGEMENT FOR AN OPERATION MODE SELECTOR**

(71) Applicant: Danfoss A/S, 6430 Nordborg (DK)
(72) Inventor: VAN BEEK, Johan, 6430 Nordborg (DK); PETERSEN, Hans Kurt, 6430 Nordborg (DK); JENSEN, Leo Finn, 6430 Nordborg (DK); BIRKELUND, Michael, 6430 Nordborg (DK)
(74) Representative: Stevens, Brian

(57) **Abstract**

A valve arrangement (1) for an operation mode selector is described, the valve arrangement (1) comprising at least two valve modules (2), each of the valve modules (2) comprising a first mode selector valve (9) connecting a discharge conduit (7) and an evaporator conduit (19) and a second mode selector valve (10) connecting a suction conduit (8) and the evaporator conduit (19), the first mode selector valve (9) and a second mode selector valve (10) being connected by a housing section (3), and the valve modules (2) being arranged side by side in a direction parallel to the discharge conduit (7) and/or the suction conduit (8).

Such a valve arrangement should be made compact.

To this end the evaporator conduit (19) extends from the housing section (3) in an area which is limited by a first plane through the discharge conduit (7) and a second plane (35) through the suction conduit (8) and parallel to the first plane.

## Description

The present invention relates to a valve arrangement for an operation mode selector, the valve arrangement comprising at least two valve modules, each of the valve modules comprising a first mode selector valve connecting a discharge conduit and an evaporator conduit and a second mode selector valve connecting a suction conduit and the evaporator conduit, the first mode selector valve and the second mode selector valve being connected by a housing section, and the valve modules being arranged side by side in a direction parallel to the discharge conduit and/or the suction conduit.

Such a valve arrangement can be used, for example, in a variable refrigerant flow system (VRF-system). Usually, such a system comprises one or more outdoor units for pumping a refrigerant through the system, one or more air conditioning devices comprising a heat exchanger and an expansion valve, and a conduit system comprising a discharge conduit and a suction conduit fluidly connecting the one or more outdoor units to the one or more air conditioning devices. The air conditioning devices can be in the form of ceiling mounted devices which are arranged inside of the building.

Typically, there are three operation modes for such a system, namely heating mode, cooling mode, and off mode. The operation mode selector allows controlling a fluid flow through the system selectively so as to select one of the three modes accordingly.

To achieve this, the operation mode selector comprises at least the two mentioned mode selector valves. The mode selector valves are arranged for selectively establishing the fluid connection through either the discharge conduit or the suction conduit to the evaporator conduit so as to supply refrigerant at an elevated temperature of approximately 70° C to the heat exchanger in the heating mode and to supply refrigerant from the air conditioning devices back to the outdoor units in the cooling mode.

Most buildings comprise more than one room which has to be heated or to be cooled. Accordingly, it is necessary to have the possibility for the mode selection for each individual room or at least for different groups of rooms. This requires a corresponding number of valve modules.

The object underlying the invention is to make compact a valve module.

This object is solved in a valve arrangement as described at the outset in that the evaporator conduit extends from the housing section in an area which is limited by a first plane through the discharge conduit and a second plane through the suction conduit and parallel to the first plane.

Such a construction makes the valve arrangement rather compact since the evaporator conduit can be connected to the respective valve module in a location which otherwise would be free.

In an embodiment of the invention the evaporator conduit extends between the discharge conduit and the suction conduit. In many cases a certain distance between the discharge conduit and the suction conduit is necessary to decouple thermically these two conduits. This distance can be used to guide the evaporator through.

In an embodiment of the invention the valve arrangement is a planar configuration, the housing section and the mode selector valves extending in a same plane. Planar means that the valve arrangement basically extends in two of the three spatial directions while the extension in the third spatial direction is comparably small. Thus, preferably, the mode selector valves and the housing section form a plate-like structure. It is, however, not necessary, that the mode selector valve, the discharge conduit, the suction conduit and the evaporator conduit extend in the same plane. It is, for example, possible that the evaporator conduit extends basically perpendicular with respect to the discharge conduit and the suction conduit.

In an embodiment of the invention at least one of the mode selector valves is a two-step opening valve. To reduce noise during switching, especially in Office buildings, in prior art systems usually four mode selector valves are used allowing a stepwise increase of the fluid flow. In this case, the fluid flow from the discharge conduit is throttled by means of a first mode selector valve having a comparably low maximum fluid flow and a second mode selector valve having a comparably large maximum fluid flow. The same is true for the suction conduit. When a two-step opening valve is used, the amount of separate mode selector valves may be reduced which effectively leads to a reduced consumption of space and thus to a good integration. Nevertheless, the system remains silent.

In an embodiment of the invention a mode selector valve comprises a main valve seat and a main flow direction through the main valve seat of the first mode selector valve is perpendicular to a main flow direction through the main valve seat of the second mode selector valve. This allows a good integration and a space saving construction. Furthermore, the flow characteristics allow reduced noise.

In an embodiment of the invention the valve modules are separated from each other by an air gap. Such an air gap decouples mechanically the respective valve modules and has the effect that a noise produced in one valve module cannot directly be transferred to another valve module keeping low the total noise produced by the valve arrangement.

In an embodiment of the invention the discharge conduit and the suction conduit are arranged in a common plane and the evaporator conduit extends perpendicular to the common plane. Such an arrangement has advantages in particular when a plurality of valve modules is arranged one by one along the discharge conduit and the suction conduit.

In an embodiment of the invention there are at least two valve modules the evaporator conduits of which extend in opposite directions. Accordingly, the space on both sides of the valve arrangement can be used to connect other pipings.

In an alternative embodiment there are at least two valve modules the evaporator conduits of which extend in the same direction. In this case the valve arrangement can be located in a position in which access on one side only is available.

In an embodiment of the valve arrangement the evaporator conduits of adjacent valve modules are offset relative to each other in a direction perpendicular to the discharge conduit. In other words, the evaporator conduits are arranged in a zig-zag-manner.

Embodiments of the present invention are now described in more detail with reference to the drawings, in which:
- Fig. 1: shows a first embodiment of the invention,
- Fig. 2: shows a cross-sectional view through the first embodiment of the invention,
- Fig. 3: shows a cross-sectional view through a mode selector valve,
- Fig. 4: shows a second embodiment of the invention,
- Fig. 5: shows a front view of the second embodiment,
- Fig. 6: shows a third embodiment of the invention, and
- Fig. 7: shows a fourth embodiment of the invention.

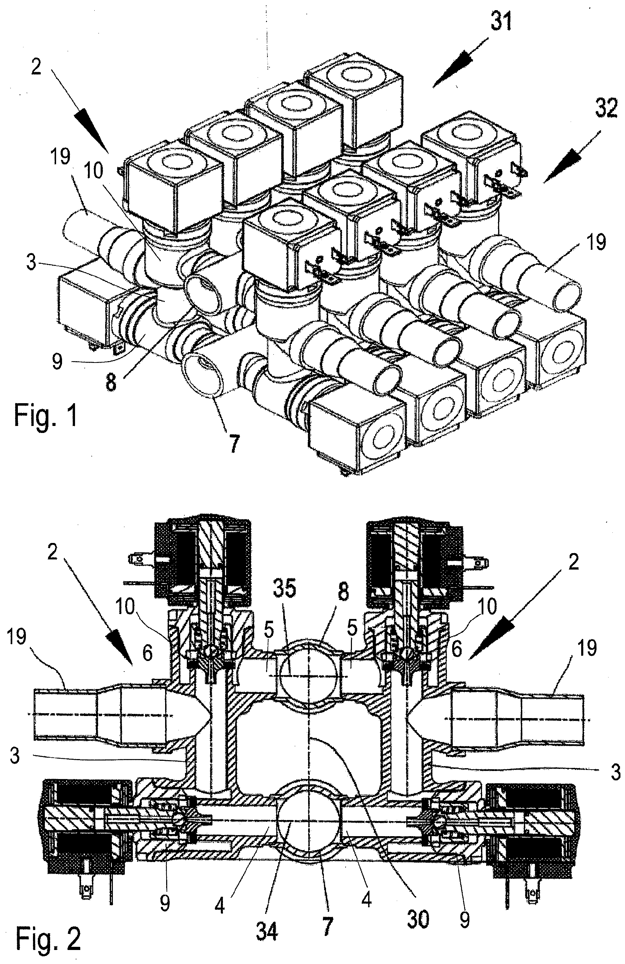

Fig. 1 shows a first embodiment of the invention. A valve arrangement 1 for an operation mode selector of an air conditioning system is depicted. The valve arrangement 1 in the embodiment shown comprises eight valve modules 2 (Fig. 2). However, a larger number of valve modules 2 can be used as well. The valve modules 2 are arranged in a very compact manner.

As can be seen in Fig. 1, the valve modules 2 are arranged in two groups 31, 32 of valve modules.

Each valve module 2 (Fig. 2) comprises a housing section 3 which is part of a housing, the housing comprising a discharge port 4, a suction port 5, and an evaporator port 6. The discharge port 4 is connected to a discharge conduit 7. The suction port 5 is connected to a suction conduit 8. The discharge conduit 7 and the suction conduit 8 are common for all of the valve modules 2 shown in Fig. 1.

The evaporator port 6 of each valve module 2 is connected to an evaporator conduit 19 extending from the housing section 3.

For selectively establishing a fluid connection between the discharge conduit 7 and the evaporator port 6 or between the suction conduit 8 and the evaporator port 6, respectively, the valve module 2 comprises two mode selector valves 9, 10. More specifically, the valve module 2 comprises a first mode selector valve 9 which is arranged to control a fluid flow from the discharge conduit 7 to the evaporator conduit 19. Furthermore, the valve module 2 comprises a second mode selector valve 10 to control a fluid flow from the evaporator conduit 19 to the suction conduit 8.

The state depicted in Fig. 2 is the off-mode. Thus, both, the first mode selector valve 9 and the second mode selector valve 10, are in fully closed state. Therefore, no fluid flow takes place between the discharge port 4 and the evaporator port 6 or between the suction port 5 and the evaporator port 6.

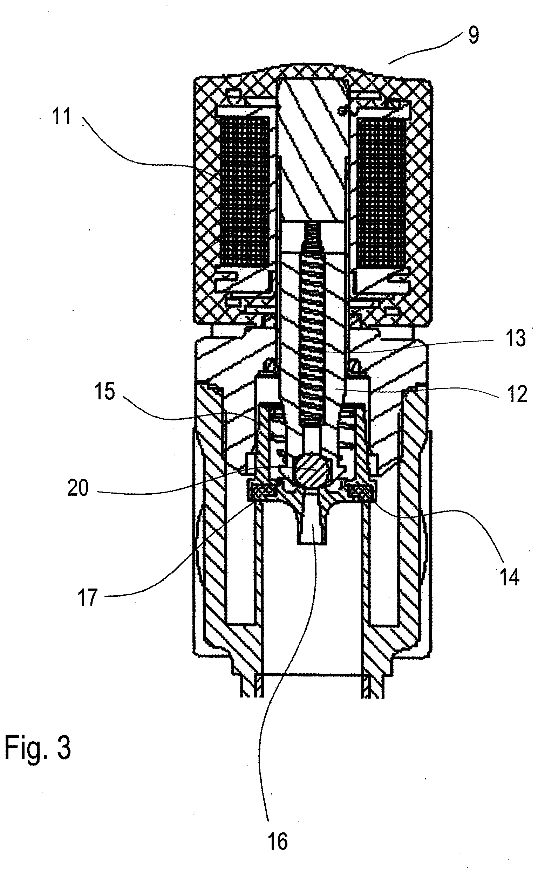

Fig. 3 shows a sectional view of the first mode selector valve 9. The second mode selector valve 10 is of the same construction.

The first mode selector valve 9 is a solenoid valve. It comprises a solenoid 11. The solenoid 11 can be energized by a power source fixed to a casing of the first mode selecting valve 9. When the solenoid 11 is energized, an auxiliary valve element 12 will be pulled upwards against a biasing force of a first biasing element 13 which is in the present embodiment in form of a coil spring.

The auxiliary valve element 12 is at one end radially surrounded by a main valve element 14 and a second biasing element 15, for example in form of a coil spring, arranged for biasing the main valve element 14 in an open position.

Furthermore, the main valve element 14 comprises an auxiliary valve seat 16 which comprises a longitudinal nozzle. In the closed state of the first mode selector valve 9 the nozzle extends through an opening of a main valve seat 17 into a lumen provided by a cylindrical wall providing the main valve seat 17.

In a first opening step the solenoid 11 is energized which translates the auxiliary valve element 12 away from the auxiliary valve seat 16 provided by the main valve element 14. By this, a comparably small fluid flow through the auxiliary valve seat 16 becomes possible and the second biasing element 15 becomes tensioned so as to create a force pushing the main valve element 14 away from the main valve seat 17. However, the biasing force created by the second biasing element 15 is pre-set so that it is smaller than a biasing force created by a pressure drop over the main valve element. However, since the auxiliary valve element 12 has opened the auxiliary valve seat 16, a pressure equalization takes place and the pressure drop over the main valve element 14 decreases.

At a certain point in time the pressure drop over the main valve element 14 has sufficiently reduced so that the main valve element 14 is pushed away from the main valve seat 17, thus performing the second opening step. As the main valve seat 17 has an opening which is larger than the opening of the auxiliary valve seat 16, the fluid flow in the second opening step is considerably larger than in the first opening step in which only the opening of the auxiliary valve seat 16 is open.

A spherical element 20 is provided at a tip of the auxiliary valve element 12. The spherical element 20 ensures a good sealing of the auxiliary valve seat 16 in the closed state. In an alternative embodiment (not shown), a substantially cylindrical element is provided instead of the spherical element 20.

It should be mentioned that other kinds of valves can be used instead of the two-step opening valve, in particular a one-step opening valve or a proportional valve.

As can be seen in Fig. 1, the valve module 2 is in a planar configuration. The housing section 3, the mode selector valves 9, 10 and the evaporator conduit 19 extend in the same plane. It is, however, possible that the discharge conduit 7 and the suction conduit 8 extend perpendicular to this plane.

To open the mode selector valves 9, 10 a peak electric power of 50 W is provided to the solenoid 11 by means of 24 V DC power supply at 2.2A for 500 ms in the first embodiment. However, instead of 24 V DC power supply, any power supply can be used which may supply sufficiently electric power to actuate the auxiliary valve element 12.

In the embodiment shown in Fig. 1 the discharge conduit and the suction conduit are arranged one above the other in a common plane 30. The evaporator conduits 19 of a first group 31 of valve modules 2 extends perpendicular to the plane 30 in one direction and the evaporator conduits 19 of another group 32 of valve modules 2 extends perpendicular to the plane 30 in the opposite direction.

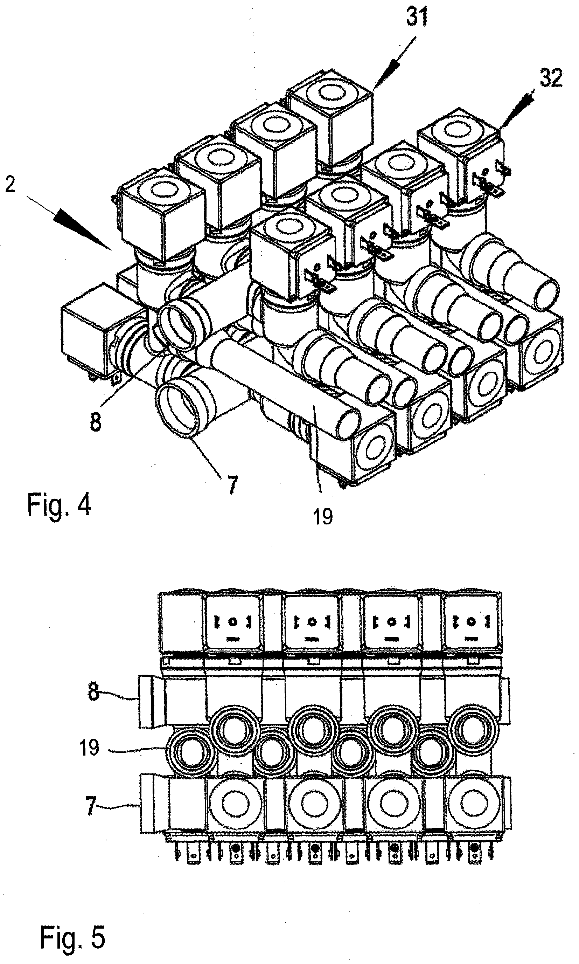

Fig. 4 shows a second embodiment of the invention which is similar to the embodiment of Fig. 1 and 2. However, the discharge conduits 19 of both groups 31, 32 of valve modules 2 extend in the same direction perpendicular to the plane 30.

As can be seen in Fig. 5, the evaporator conduits 19 of adjacent modules are off-set relative to each other in a direction perpendicular to the discharge conduit 7. In other words, the evaporator conduits 19 are arranged in a zig-zag manner so that the space available can be used optimally.

As can be seen in particular from Fig. 2 at least one evaporator conduit 19 (in the embodiment shown all evaporator conduit 19) extends from the housing section 3 in an area which is limited by a first plane 34 through the discharge conduit 7 and a second plane 35 through the suction conduit 8, wherein the first plane 34 and the second plane 35 are parallel to each other.

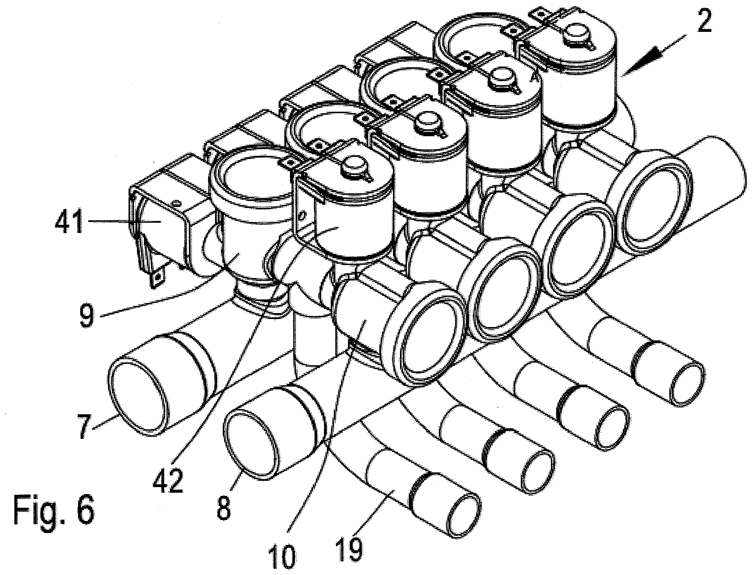

Fig. 6 shows a third embodiment which is somewhat simpler than the previous shown embodiments.

In this embodiment the discharge conduit 7 and the suction conduit 8 are arranged in a plane and the valve modules 2 are arranged on one side of this plane.

As mentioned above, the first mode selector valve 9 and the second mode selector valve 10 can be two-step opening valves. However, other types of valves are possible. In the present case, both the first mode selector valve 9 and the second mode selector valve 10 are servo-controlled valves. The first mode selector valve 9 comprises a pilot valve arrangement 41 which is arranged perpendicular to the first mode selector valve 9. The second mode selector valve 10 comprises a pilot valve arrangement 42 which is arranged perpendicular to the second mode selector valve. Both pilot valve arrangements 41, 42 comprise in a way know per se a coil and a yoke arrangement.

The evaporator conduits 19 are guided between the discharge conduit 7 and the suction conduit 8. On the side of the discharge conduit 7 and the suction conduit 8 opposite to the valve modules 2 the evaporator conduits 19 are curved to extend finally in a direction parallel to the plane defined by the axis of the discharge conduit 7 and the suction conduit 8.

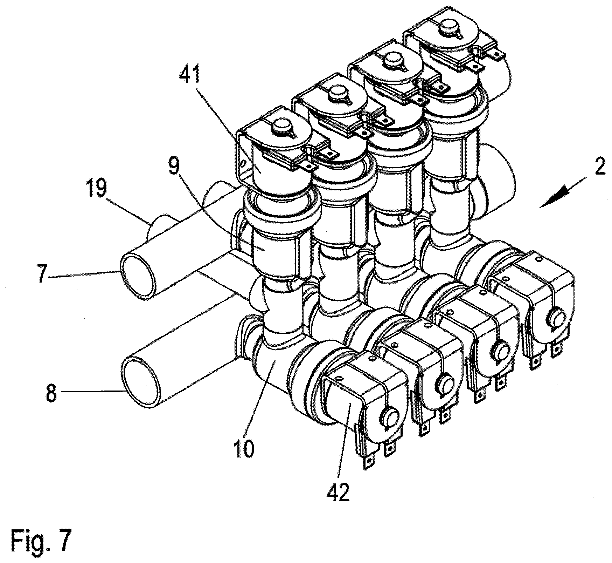

Fig. 7 shows a fourth embodiment similar to that of Fig. 6. In this embodiment the discharge conduit 7 and the suction conduit 8 are arranged in a common plane as well and the valve modules 2 are arranged on one side of this plane only. The evaporator conduits 19 extend between the discharge conduit 7 and the suction conduit 8 in a direction perpendicular to the plane defined by the discharge conduit 7 and the suction conduit 8.

The first mode selector valve 9 of each valve module 2 comprises a pilot valve arrangement 41 as well. The second mode selector valve 10 of each valve module 2 comprises a pilot valve arrangement 42. In difference to the embodiment shown in Fig. 6 the pilot valve arrangements 41, 42 are mounted on top of the first and second mode selector valve 9, 10.

## Claims

1. Valve arrangement (1) for an operation mode selector, the valve arrangement comprising at least two valve modules (2), each of the valve modules (2) comprising a first mode selector valve (9) connecting a discharge conduit (7) and an evaporator conduit (19) and a second mode selector valve (10) connecting a suction conduit (8) and the evaporator conduit (19), the first mode selector valve (9) and the second mode selector valve (10) being connected by a housing section (3), and the valve modules (2) being arranged side by side in a direction parallel to the discharge conduit (7) and/or the suction conduit (8), **characterized in that** the evaporator conduit (19) extends from the housing section (3) in an area which is limited by a first plane (34) through the discharge conduit (7) and a second plane (35) through the suction conduit (8) and parallel to the first plane (34).

2. Valve arrangement according to claim 1, **characterized in that** the evaporator conduit (19) extends between the discharge conduit (7) and the suction conduit (8).

3. Valve arrangement according to claim 1 or 2, **characterized in that** the valve module (2) is in a planar configuration, the housing section (3) and the mode selector valves (9, 10) extending in a same plane.

4. Valve arrangement according to any of claims 1 to 3, **characterized in that** at least one of the mode selector valves (9, 10) is a two-step opening valve.

5. Valve arrangement according to any of claims 1 to 4, **characterized in that** each mode selector valve (9, 10) comprises a main valve seat (17) and a main flow direction through the main valve seat (17) of the first mode selector valve (9) is perpendicular to a main flow direction through the main valve seat (17) of the second mode selector valve (10).

6. Valve arrangement according to any of claims 1 to 5, **characterized in that** the valve modules (2) being separated from each other by an air gap.

7. Valve arrangement according to any of claims 1 to 6, **characterized in that** the discharge conduit (7) and the suction conduit (8) are arranged in a common plane (30) and the evaporator conduit (19) extends perpendicular to the common plane (30).

8. Valve arrangement according to claim 7, **characterized by** at least two valve modules (2) the evaporator conduits (19) of which extend in opposite directions.

9. Valve arrangement according to claim 7, **characterized by** at least two valve modules (2) the evaporator conduits (19) of which extend in the same direction.

10. Valve arrangement according to claim 9, **characterized in that** the evaporator conduits (19) of adjacent valve modules are offset relative to each other in a direction perpendicular to the discharge conduit (7).
